# FASCICULE DE BREVET EUROPEEN

(11) **EP 1 670 078 B1**
(45) Date de publication et mention de la délivrance du brevet: **18.04.2012**
(21) Numéro de dépôt: 05301009.6
(22) Date de dépôt: 06.12.2005
(51) Int. Cl.: H01L 41/04, H01L 41/06, F02D 41/20, H02M 7/5387, H01H 47/32, H03K 17/64

(54) **Procédé de commande d'un circuit de pilotage pour des actionneurs piézostrictifs ou magnétostrictifs**
Steuerverfahren einer Steuerschaltung für piezostriktive oder magnetostriktive Aktoren
Control method of a drive circuit for piezostrictive or magnetostrictive actuators

(30) Priorité: 08.12.2004 FR 0413045
(43) Date de publication de la demande: 14.06.2006
(73) Titulaire: Renault s.a.s., 92100 Boulogne Billancourt (FR)
(72) Inventeur: Ripoll, Christophe, 78220, Viroflay (FR); Macua, Eugenio, 31008, Pamplona (ES)

(56) Documents cités:
- WO-A1-2006/042998
- DE-A1- 3 905 701
- FR-A- 2 846 808
- FR-A- 2 863 119
- US-B1- 6 577 488

## Description

L'invention concerne un procédé de commande d'un circuit de pilotage pour des actionneurs piézostrictifs ou magnétostrictifs.

Des actionneurs piézostrictifs ou magnétostrictifs sont notamment utilisés dans des injecteurs de carburant pour moteurs de véhicules.

Les injecteurs automobiles ont connu des développements importants ces dernières années. Des développements ont notamment été réalisés sur l'injection directe essence ou diesel, les moteurs à rampe commune haute pression ou encore les injecteurs pompe.

Les injecteurs utilisent classiquement une pompe électrique d'alimentation en carburant. Dans le cas d'un moteur Diesel à rampe commune, la pompe alimente un canal d'une rampe de distribution de l'ensemble des injecteurs sous une pression de source sensiblement constante, de l'ordre de 1600·10⁵ Pa (1600 bars) par exemple. Le canal communique avec des conduites obturées par un injecteur respectif. L'ouverture d'une vanne de l'injecteur provoque l'injection, par exemple dans la chambre de combustion en cas d'injection directe.

La vanne comprend classiquement une aiguille obturant sélectivement une buse d'injection en fonction de commandes qui lui sont appliquées. L'aiguille est classiquement déplacée entre une position de consigne d'injection et une position de consigne d'obturation. Le déplacement de l'aiguille est habituellement généré par un actionneur magnétostrictif ou un actionneur piézostrictif.

Par ailleurs, l'aiguille présente le plus souvent une extrémité d'obturation conique, venant reposer sur un siège de la buse pour garantir l'obturation. A l'initiation de l'injection, l'aiguille quitte le siège, et le carburant est temporairement injecté en formant un bulbe. Le débit instantané de l'injecteur n'est ainsi pas contrôlé précisément.

Ces divers problèmes conduisent globalement à une vaporisation incomplète et non homogène du carburant lors de la formation du mélange dans la chambre de combustion, et à un contrôle imprécis de la richesse du mélange. Les conséquences sont donc une altération du rendement du moteur et la formation d'une quantité élevée de gaz polluants.

Le document FR-A-2 801 346 décrit un dispositif d'injection comprenant une vanne munie d'une aiguille d'obturation déplacée par un actionneur piézoélectrique. L'actionneur piézoélectrique reçoit une commande avec une composante alternative pour générer des oscillations mécaniques de l'aiguille, par rapport à la position d'ouverture de consigne. On contrôle ainsi de manière précise la formation de très fines gouttelettes.

De même, le document FR 2 762 648 décrit un dispositif d'injection comprenant un actionneur piézoélectrique. La formation de fines gouttelettes est favorisée par les oscillations d'une buse d'injection mise en vibration par l'actionneur.

Le document FR 2 846 808 a pour objet de proposer un circuit électronique pour piloter de tels actionneurs piézoélectriques. Le circuit comporte par exemple un montage d'alimentation de l'actionneur en pont, deux branches du pont comportant des interrupteurs pilotables tels que des transistors MOS, les deux autres branches comportant des diodes. Le circuit est commandé par un dispositif de pilotage de manière à générer un courant alimentant l'actionneur. Le courant comporte, dans un exemple décrit, une période, ladite période comportant une phase de montée rapide du courant, une phase de descente rapide puis une phase de descente lente.

Le document DE 39 05 701 A1 montre un procédé de commande d'un circuit alimentant une charge inductive, selon lequel des phases de montée ou de descente rapide, ainsi que des phases de descente lente peuvent être pilotées pour suivre un signal de consigne.

Les inventeurs ont constaté que ce signal n'était pas très efficace, c'est-à-dire que l'amplitude des oscillations obtenues n'est pas très importante par rapport à l'amplitude des variations de courant. En effet, l'amplitude du premier harmonique a une valeur de l'ordre de 1,3 fois l'amplitude de montée rapide du courant. C'est donc un objectif de l'invention de proposer un procédé de commande d'un tel circuit qui soit plus efficace.

Avec cet objectif, l'invention a pour objet un procédé de commande d'un circuit délivrant un courant périodique alimentant un actionneur, le circuit étant apte à commander exclusivement une phase de montée rapide du courant, une phase de descente rapide et une phase de descente lente. La période comporte une séquence successive d'une première phase de descente lente, d'une première phase de descente rapide, d'une deuxième phase de descente lente puis d'une première phase de montée rapide.

Les inventeurs ont constaté qu'avec un tel procédé de commande du circuit, l'efficacité du courant est bien meilleure. En effet, l'amplitude de l'harmonique de premier ordre, c'est-à-dire de la même fréquence que la période, est bien plus importante que dans le signal de l'art antérieur, comme on le verra mieux par la suite.

La séquence forme la période complète.

Dans un mode de réalisation, la séquence est suivie d'une troisième phase de descente lente, d'une deuxième phase de montée rapide, d'une quatrième phase de descente lente et d'une deuxième phase de descente rapide pour former une période complète. On réalise ainsi un signal se rapprochant encore plus d'un signal sinusoïdal, ce qui lui confère une efficacité encore plus grande.

De manière particulière, la fin des phases lentes est commandée par un signal d'horloge. On contrôle ainsi de manière précise la fin des phases de descente lente, ainsi que la durée de la période du signal.

Avantageusement, la fin des phases rapides est commandée par la détection du passage à des seuils de courant prédéterminés.

Plus particulièrement, la fin de la première phase de descente rapide est commandée par la détection du passage à un premier seuil de courant prédéterminé, la fin de la première phase de montée rapide est commandée par la détection du passage à un deuxième seuil de courant prédéterminé supérieur au premier seuil de courant.

Dans le mode de réalisation, la fin de la deuxième phase de montée rapide est commandée par la détection du passage à un troisième seuil de courant prédéterminé supérieur au deuxième seuil de courant, et la fin de la deuxième phase de descente rapide est commandée par la détection du passage au deuxième seuil de courant.

L'invention a aussi pour objet un circuit mettant en oeuvre le procédé précédent.

Pour cela, le circuit comporte par exemple un automate à états finis dont des états commandent les différentes phases.

Un tel circuit comporte par exemple un circuit en pont présentant un premier interrupteur connecté entre une première et une troisième borne et un deuxième interrupteur connecté entre une deuxième et une quatrième borne, une première diode connectée entre la première et quatrième borne, et dont la cathode est raccordée à ladite première borne, une deuxième diode connectée entre la deuxième et troisième borne, et dont la cathode est raccordée à ladite troisième borne, l'actionneur étant connecté entre la troisième et la quatrième borne du circuit en pont.

L'invention sera mieux comprise et d'autres particularités et avantages apparaîtront à la lecture de la description qui va suivre, la description faisant référence aux dessins annexés parmi lesquels :
- la figure 1 est une représentation schématique du circuit électronique de pilotage ;
- la figure 2 est un diagramme représentant un mouvement souhaité de l'actionneur appliqué à un injecteur de carburant ;
- la figure 3 représente des chronogrammes de différents signaux ;
- la figure 4 représente un signal selon un mode de réalisation de l'invention.

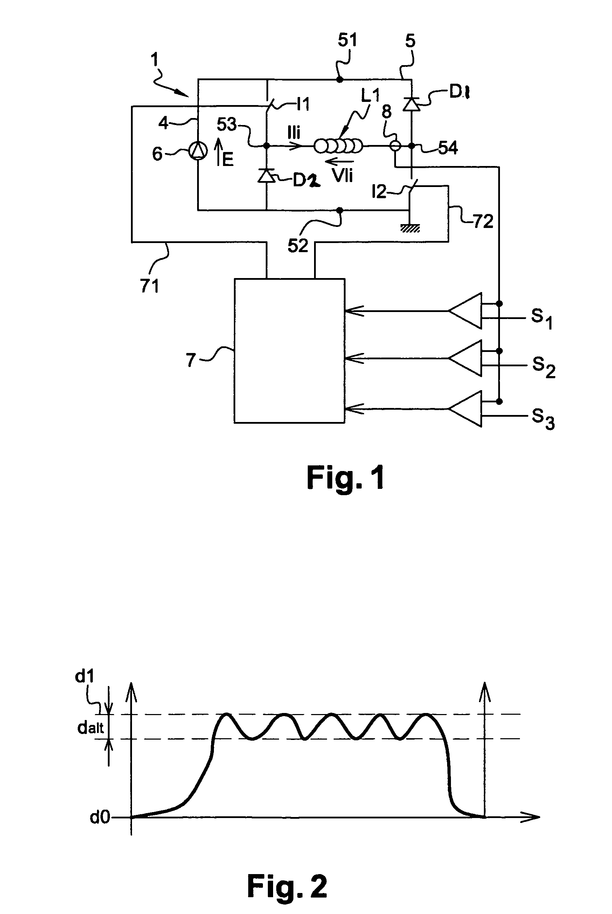

La figure 1 représente schématiquement un dispositif d'actionnement. Ce dispositif d'actionnement est muni d'un actionneur non représenté et un circuit délivrant un courant périodique alimentant l'actionneur. Ce circuit comportant un circuit électronique de pilotage 4 et un dispositif de pilotage des interrupteurs 7. L'actionneur comprend une pièce actionnée et un organe électrique de commande des déplacements de la pièce actionnée. La figure 1 montre l'organe électrique de commande L1 sous forme de dipôle.

Le circuit électronique de pilotage 4 comprend un circuit en pont 5. Ce circuit en pont 5 comprend de façon connue en soi quatre bornes 51, 52, 53 et 54. Une source électrique continue 6, par exemple une batterie ou un convertisseur de puissance alternatif-continu, est connectée aux premières et deuxièmes bornes 51 et 52 du pont 5 et fournit une tension ou une intensité continue. L'organe électrique de commande L1 est connecté entre la troisième et la quatrième borne du circuit en pont 5. Un premier interrupteur I1 est connecté entre la première et la troisième borne 51 et 53, et un deuxième interrupteur I2 est connecté entre la deuxième 52 et la quatrième borne 54. L'organe électrique de commande L1 peut se présenter sous forme de circuit intégré dans lequel sont ménagés des transistors de type Mos utilisés comme interrupteurs I1 et I2. On peut également utiliser d'autres types d'interrupteurs tels que des transistors IGBT ou des amplis OP. La commutation des interrupteurs I1 et I2 est commandée par l'intermédiaire d'un dispositif de pilotage des interrupteurs 7, par l'intermédiaire de lignes de pilotage 71 et 72. Le circuit en pont présente en outre une première et une deuxième diode D1 et D2. La première diode D1 est connectée entre 1a première et la quatrième borne 51 et 54, la cathode de la diode D1 étant raccordée à la première borne 51. La deuxième diode D2 est connectée entre la deuxième et la troisième borne 52 et 53, la cathode de la deuxième diode D2 étant connectée à la troisième borne 53.

Dans son application à un injecteur automobile, on souhaite réaliser une séquence de pilotage de l'actionneur telle que représentée à la figure 2. Ce diagramme présente la position de l'extrémité de l'actionneur, par exemple d'une aiguille de l'injecteur, en fonction du temps. L'aiguille est ainsi déplacée initialement d'une première position de consigne d0 jusqu'à une deuxième position de consigne d1, avec une amplitude valant d1-d0. L'aiguille se déplace alors alternativement d'une distance dalt par rapport à la deuxième position de consigne d1. Dalt présente une amplitude inférieure à d1-d0. Le déplacement alternatif de la distance dalt est généralement périodique. L'aiguille peut ultérieurement être ramenée à la première position de consigne d0 ou être maintenue à la position de consigne d1.

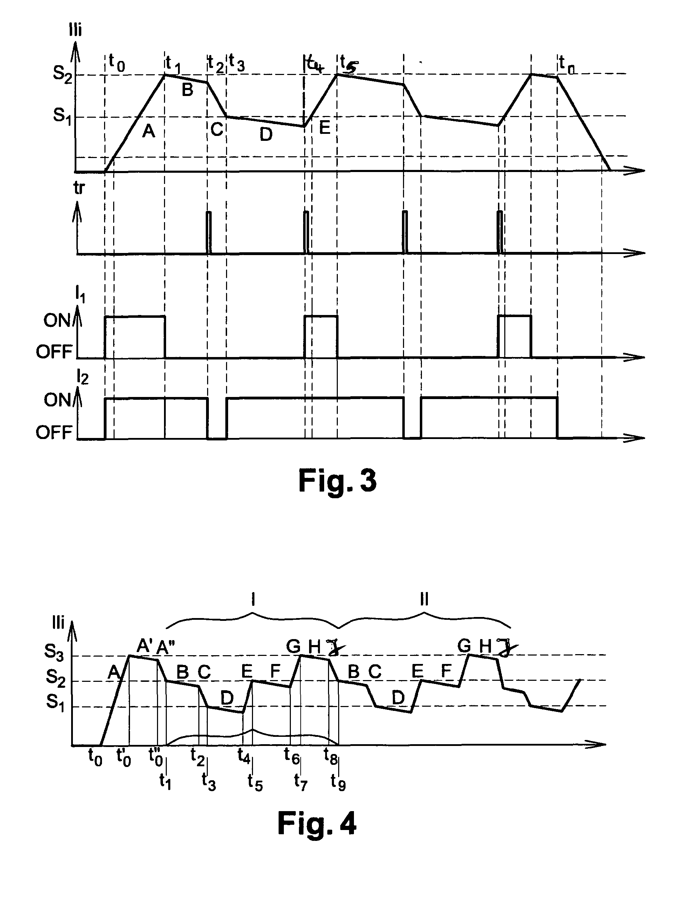

La figure 3 représente les chronogrammes de différents signaux de pilotage appliqués par le dispositif de pilotage des interrupteurs 7, des signaux appliqués aux bornes de l'organe électrique de commande L1. L'organe électrique de commande L1 est alors assimilé électriquement à une inductance. La source électrique continue 6 est dans l'exemple une source de tension continue appliquant un potentiel E.

Dans l'exemple représenté, le niveau de tension appliqué sur la grille des transistors formant les interrupteurs I1 et I2 correspond à leur position de commutation, comme cela est illustré à la figure 3. Le dispositif de pilotage 7 comporte par exemple un automate à états finis dont des états commandent les signaux de commande des interrupteurs.

Pendant la phase A, entre les instants t0 et t1, les interrupteurs I1 et I2 sont fermés (OFF) alors que l'aiguille est à la position de consigne d0. Les diodes D1 et D2 sont alors bloquées, et le courant emprunte le chemin suivant entre les bornes 51 et 52 : 51-53-54-52. Ces nombres correspondent aux références des bornes traversées successivement. La tension Vli entre les bornes 53 et 54 est alors sensiblement égale à E. L'organe électrique de commande L1 est alors traversé par un courant Ili croissant rapidement.

Pendant la phase B, entre les instants t1 et t2, l'interrupteur I1 est ouvert (ON) et l'interrupteur 12 est fermé. La diode D1 est bloquée, tandis que la diode D2 est passante. Le courant traversant l'organe électrique de commande L1 effectue un court-circuit entre les bornes 53, 54 et 52. L'inductance restitue alors l'énergie emmagasinée durant les phases précédentes. La tension Vli entre les bornes 53 et 54 est alors sensiblement égale à - V0, ce qui correspond à la tension de seuil de la diode D2. L'organe électrique de commande L1 est alors traversé par un courant Ili décroissant lentement. La phase B est une première phase de descente lente.

Pendant la phase C, entre les instants t2 et t3, les interrupteurs I1 et I2 sont ouverts, alors que les diodes D1 et D2 deviennent passantes. Le courant emprunte alors le chemin suivant entre les bornes 51 et 52 : 52-53-54-51. La tension Vli entre les bornes 53 et 54 est alors sensiblement égale à - E, aux tensions de seuil des diodes D1 et D2 près. L'organe électrique de commande L1 est alors traversé par un courant I1i décroissant plus rapidement que lors de la phase t1-t2. La phase C est une première phase de descente rapide.

Durant la phase D, entre les instants t3 et t4, les interrupteurs sont commandés de la même manière que pendant la phase B. L'organe électrique de commande L1 est alors traversé par un courant Ili décroissant lentement. La phase D est une deuxième phase de descente lente.

Durant la phase E, entre t4 et t5, les interrupteurs sont commandés de la même manière que pendant la phase A. L'organe électrique de commande L1 est alors traversé par un courant Ili croissant rapidement. La phase E est une première phase de montée rapide.

Les alternances des phases B, C, D et E sont répétées plusieurs fois, de façon périodique, lorsque l'aiguille est proche de sa position de consigne d1, jusqu'à l'instant tn, comme représenté à la figure 3. L'aiguille est alors déplacée jusqu'à sa position de consigne d0, en ouvrant les interrupteurs I1 et I2 pendant une durée adéquate.

Dans une application de l'actionneur à un injecteur de moteur thermique, on peut prévoir que le cycle est répété à une fréquence de plusieurs dizaines de hertz en fonction du régime moteur. Les phases de déplacement depuis la position de consigne d1 sont répétées à une fréquence plusieurs fois supérieure à la fréquence du cycle complet.

On peut utiliser tout dispositif approprié de pilotage des interrupteurs. On utilise notamment un dispositif de pilotage 7 présentant un organe de mesure 8 du signal appliqué aux bornes de l'organe électrique de commande L1. Le dispositif de pilotage 7 compare ce signal à un premier seuil S1 et un deuxième seuil S2, pour commuter les différents interrupteurs du circuit électronique. On peut prévoit qu'à la fin des phases de montée rapide ou de descente rapide, on détecte que le courant a atteint un seuil de courant prédéterminé. Le dispositif de pilotage commute alors les interrupteurs I1 ou I2. Par exemple, la transition de la première phase de descente rapide C vers la deuxième phase de descente lente D se fait lors de la détection du passage du premier seuil de courant S1. De même, la transition de la première phase de montée rapide E vers la phase de descente lente se fait lors de la détection du passage d'un deuxième seuil de courant S2, supérieur à S1.

Pour les transitions à la fin des phases de descente lente, on utilise de préférence des transitions sur les fronts d'un signal d'horloge, par exemple les fronts montants d'un signal d'horloge tr représenté sur la figure 3. Ainsi, l'instant t2 de fin de la première phase de descente lente B est déterminé par un premier front montant du signal tr. De même, l'instant t4 de fin de la deuxième phase de descente lente D est déterminé par un deuxième front montant du signal tr.

On constate qu'avec le signal généré, l'amplitude du premier harmonique a une valeur de l'ordre de 2,5 fois la différence entre S1 et S2, ce qui permet d'obtenir une amplitude de déplacement environ deux fois supérieure à celle obtenue avec le signal selon l'art antérieur.

Dans un mode de réalisation, comme représenté sur le chronogramme de la figure 4, la période des phases B - C - D - E est suivie d'une troisième phase de descente lente F entre les instants t5 et t6, d'une deuxième phase de montée rapide G entre les instants t6 et t7, d'une quatrième phase de descente lente H entre les instants t7 et t8 et d'une deuxième phase de descente rapide J entre les instants t8 et t9. Ainsi, une première période I est formée des phases B à J, et est suivie d'autres périodes, dont une deuxième période II est représentée, composée des mêmes phases. La première période I est précédée par exemple de la phase de montée rapide A entre les instants t0 et t'0, d'une phase A' de descente lente entre 1es instants t'0 et t"0 et d'une phase A" de descente rapide entre les instants t"0 et t1.

Dans ce mode de réalisation, la transition de la deuxième phase de montée rapide G vers 1a quatrième phase de descente lente H se fait lors de la détection à l'instant t7 du passage d'un troisième seuil de courant prédéterminé S3, supérieur à S2. Par ailleurs, la transition de 1a deuxième phase de descente rapide J vers la première phase de descente lente B de la période suivante II se fait lors de la détection du passage du deuxième seuil de courant prédéterminé S2 à l'instant t9. La transition à la fin des phases de descente lente a lieu sur des fronts montants du signal d'horloge tr.

On constate qu'avec le signal généré selon ce mode de réalisation, l'amplitude du premier harmonique a une valeur de l'ordre de 2 fois la différence entre S1 et S3, ce qui permet d'obtenir une amplitude de déplacement environ 1,5 fois supérieure à celle obtenue avec le signal selon l'art antérieur.

## Revendications

1. Procédé de commande d'un circuit (1) délivrant un courant périodique alimentant un actionneur, le circuit (1) étant apte à commander exclusivement une phase de montée rapide du courant, une phase de descente rapide et une phase de descente lente par l'intermédiaire d'amplis OP, **caractérisé en ce que** la période comporte une séquence successive d'une première phase de descente lente (B), d'une première phase de descente rapide (C), d'une deuxième phase de descente lente (D) puis d'une première phase de montée rapide (E), d'une troisième phase de descente lente (F), d'une deuxième phase de montée rapide (G), d'une quatrième phase de descente lente (H) et d'une deuxième phase de descente rapide (J) pour former une période complète.

2. Procédé de commande selon la revendication 1, dans lequel la fin des phases lentes (B, D, F, H) est commandée par un signal d'horloge.

3. Procédé de commande selon la revendication 1, dans lequel la fin des phases rapi.des (C, E, G, J) est commandée par la détection du passage à des seuils de courant prédéterminés.

4. Procédé de commande selon la revendication 3, dans lequel :
- la fin de la première phase de descente rapide (C) est commandée par la détection du passage à un premier seuil (S1) de courant prédéterminé.
- la fin de la première phase de montée rapide (E) est commandée par la détection du passage à un deuxième seuil (S2) de courant prédéterminé supérieur au premier seuil de courant (S1),

5. Procédé de commande selon les revendications 1 et 4 prises en combinaison, dans lequel :
- la fin de la deuxième phase de montée rapide (G) est commandée par la détection du passage à un troisième seuil de courant (S3) prédéterminé supérieur au deuxième seuil (S2) de courant, et
- la fin de la deuxième phase de descente rapide (J) est commandée par la détection du passage au deuxième seuil (S2) de courant.

6. Circuit (1) de pilotage d'un actionneur, délivrant un courant périodique alimentant l'actionneur, le circuit (1) comportant un circuit en pont (5) :
- présentant un premier interrupteur (I1) connecté entre une première (51) et une troisième borne (53) et un deuxième interrupteur (12) connecté entre une deuxième (52) et une quatrième borne (54), les interrupteurs étant des amplis OP;
- une première diode (D1) connectée entre la première (51) et quatrième borne (54), et dont la cathode est raccordée à ladite première borne (51) ;
- une deuxième diode (D2) connectée entre la deuxième (52) et troisième borne (53), et dont la cathode est raccordée à ladite troisième borne (53) ;
- l'actionneur étant connecté entre la troisième et la quatrième borne (53, 54) du circuit en pont (5).
pour commander exclusivement une phase de montée rapide du courant, une phase de descente rapide et une phase de descente lente, **caractérisé en ce qu'**il comporte des moyens pour que la période du courant délivré comporte une séquence successive d'une première phase de descente lente (B), d'une première phase de descente rapide (C), d'une deuxième phase de descente lente (D) puis d'une première phase de montée rapide (E) d'une troisième phase de descente lente (F), d'une deuxième phase de montée rapide (G), d'une quatrième phase de descente lente (H) et d'une deuxième phase de descente rapide (J) pour former une période complète.

7. Circuit (1) selon la revendication 6, comportant un automate à états finis dont des états commandent les différentes phases.

## Claims

1. Method for controlling a circuit (1) delivering a periodic current supplying an actuator, the circuit (1) being suitable for exclusively controlling a rapid ascent phase of the current, a rapid descent phase and a slow descent phase via OP amplifiers, **characterized in that** the period comprises a successive sequence of a first slow descent phase (B), a first rapid descent phase (C), a second slow descent phase (D) then a first rapid ascent phase (E), a third slow descent phase (F), a second rapid ascent phase (G), a fourth slow descent phase (H) and a second rapid descent phase (J) to form a complete period.

2. Control method according to Claim 1, in which the end of the slow phases (B, D, F, H) is controlled by a clock signal.

3. Control method according to Claim 1, in which the end of the rapid phases (C, E, G, J) is controlled by the detection of the transition through predetermined current thresholds.

4. Control method according to Claim 3, in which:
- the end of the first rapid descent phase (C) is controlled by the detection of the transition through a first predetermined current threshold (S1),
- the end of the first rapid ascent phase (E) is controlled by the detection of the transition through a second predetermined current threshold (S2) greater than the first current threshold (S1).

5. Control method according to Claims 1 and 4 taken in combination, in which:
- the end of the second rapid ascent phase (G) is controlled by the detection of the transition through a third predetermined current threshold (S3) greater than the second current threshold (S2), and
- the end of the second rapid descent phase (J) is controlled by the detection of the transition through the second current threshold (S2).

6. Circuit (1) for driving an actuator, delivering a periodic current supplying the actuator, the circuit (1) comprising a bridge circuit (5) having:
- a first switch (I1) connected between a first terminal (51) and a third terminal (53) and a second switch (12) connected between a second terminal (52) and a fourth terminal (54), the switches being OP amplifiers;
- a first diode (D1) connected between the first terminal (51) and fourth terminal (54), and the cathode of which is connected to said first terminal (51);
- a second diode (D2) connected between the second terminal (52) and third terminal (53), and the cathode of which is connected to said third terminal (53);
- the actuator being connected between the third and fourth terminals (53, 54) of the bridge circuit (5),
to exclusively control a rapid ascent phase of the current, a rapid descent phase and a slow descent phase, **characterized in that** it comprises means to ensure that the period of the current delivered comprises a successive sequence of a first slow descent phase (B), a first rapid descent phase (C), a second slow descent phase (D) then a first rapid ascent phase (E), a third slow descent phase (F), a second rapid ascent phase (G), a fourth slow descent phase (H) and a second rapid descent phase (J) to form a complete period.

7. Circuit (1) according to Claim 6, comprising a finite state machine whose states control the different phases.

## Patentansprüche

1. Verfahren zur Steuerung einer Schaltung (1), die einen einen Stellantrieb speisenden periodischen Strom liefert, wobei die Schaltung (1) ausschließlich eine Phase des schnellen Anstiegs des Stroms, eine Phase des schnellen Abfallens und eine Phase des langsamen Abfallens mittels Operationsverstärkern steuern kann, **dadurch gekennzeichnet, dass** die Periode eine aufeinanderfolgende Sequenz einer ersten langsamen Abfallphase (B), einer ersten schnellen Abfallphase (C), einer zweiten langsamen Abfallphase (D), dann einer ersten schnellen Anstiegsphase (E), einer dritten langsamen Abfallphase (F), einer zweiten schnellen Anstiegsphase (G), einer vierten langsamen Abfallphase (H) und einer zweiten schnellen Abfallphase (J) aufweist, um eine vollständige Periode zu formen.

2. Steuerverfahren nach Anspruch 1, bei dem das Ende der langsamen Phasen (B, D, F, H) von einem Taktsignal gesteuert wird.

3. Steuerverfahren nach Anspruch 1, bei dem das Ende der schnellen Phasen (C, E, G, J) durch die Erfassung des Übergangs auf vorbestimmte Stromschwellen gesteuert wird.

4. Steuerverfahren nach Anspruch 3, bei dem:
- das Ende der ersten schnellen Abfallphase (C) durch die Erfassung des Übergangs auf eine erste vorbestimmte Stromschwelle (S1) gesteuert wird,
- das Ende der ersten schnellen Anstiegsphase (E) durch die Erfassung des Übergangs auf eine zweite vorbestimmte Stromschwelle (S2) höher als die erste vorbestimmte Stromschwelle (S1) gesteuert wird.

5. Steuerverfahren nach den Ansprüchen 1 und 4 in Kombination, bei dem:
- das Ende der zweiten schnellen Anstiegsphase (G) durch die Erfassung des Übergangs auf eine dritte vorbestimmte Stromschwelle (S3) höher als die zweite Stromschwelle (S2) gesteuert wird; und
- das Ende der zweiten schnellen Abfallphase (J) durch die Erfassung des Übergangs auf die zweite Stromschwelle (S2) gesteuert wird.

6. Schaltung (1) zur Steuerung eines Stellantriebs, die einen den Stellantrieb speisenden periodischen Strom liefert, wobei die Schaltung (1) eine Brückenschaltung (5) aufweist, die enthält:
- einen ersten Schalter (I1), der zwischen einer ersten (51) und einer dritten Klemme (53) verbunden ist, und einen zweiten Schalter (12), der zwischen einer zweiten (52) und einer vierten Klemme (54) verbunden ist, wobei die Schalter Operationsverstärker sind;
- eine erste Diode (D1), die zwischen der ersten (51) und vierten Klemme (54) verbunden ist, und deren Kathode an die erste Klemme (51) angeschlossen ist;
- eine zweite Diode (D2), die zwischen der zweiten (52) und dritten Klemme (53) verbunden ist, und deren Kathode an die dritte (53) Klemme angeschlossen ist;
wobei der Stellantrieb zwischen der dritten und der vierten Klemme (53, 54) der Brückenschaltung (5) verbunden ist, um ausschließlich eine schnelle Anstiegsphase des Stroms, eine schnelle Abfallphase und eine langsame Abfallphase zu steuern, **dadurch gekennzeichnet, dass** sie Einrichtungen aufweist, damit die Periode des gelieferten Stroms eine aufeinanderfolgende Sequenz einer ersten langsamen Abfallphase (B), einer ersten schnellen Abfallphase (C), einer zweiten langsamen Abfallphase (D), dann einer ersten schnellen Anstiegsphase (E), einer dritten langsamen Abfallphase (F), einer zweiten schnellen Anstiegsphase (G), einer vierten langsamen Abfallphase (H) und einer zweiten schnellen Abfallphase (J) aufweist, um eine vollständige Periode zu formen.

7. Schaltung (1) nach Anspruch 6, die einen Automaten mit endlichen Zuständen aufweist, dessen Zustände die verschiedenen Phasen steuern.
